# EUROPEAN PATENT SPECIFICATION

(11) **EP 0 551 883 B1**
(45) Date of publication and mention of the grant of the patent: **23.04.1997**
(21) Application number: 93100415.4
(22) Date of filing: 13.01.1993
(51) Int. Cl.: B60H 1/34

(54) **Air vent for the conditioning air of motor vehicles with flow orientation means having a modular structure**
Luftaustritt für Kraftfahrzeuge mit Luftleitflächen in modularer Struktur
Structure modulaire des moyens d'orientation du débit pour buse d'aération dans la climatisation des voitures automobiles

(30) Priority: 17.01.1992 IT TO920029
(43) Date of publication of application: 21.07.1993
(73) Proprietor: FOGGINI PROGETTI S.r.l., I-10092 Beinasco Torino (IT)
(72) Inventor: Vercesi, Piercarlo, I-10100 Torino (IT); Davico, Claudio, I-10094 Giaveno (Prov. of Torino) (IT); Giorgini, Gerardo, I-10024 Moncalieri (Prov. of Torino) (IT)
(74) Representative: Modiano, Guido, Dr.-Ing.

(56) References cited:
- DE-A- 3 835 614
- DE-U- 8 904 585
- GB-A- 2 196 421
- US-A- 4 665 804
- PATENT ABSTRACTS OF JAPAN vol. 10, no. 115 (M-474)(2172) 30 April 1986 & JP-A-60 244 619 ( TOYODA GOSEI K.K. )

## Description

The present invention relates to an air vent for the conditioning air of motor vehicles of the type as disclosed in DE-A-3 835 614 and as defined in the preamble of the appended claim 1, which comprises flow orientation means which can be actuated manually by means of at least one button or slider protruding outside the air vent.

Known air vents of the specified type currently use, to direct the flow of air, two rows of vanes, one arranged behind the other, which can be orientated along mutually perpendicular axes, respectively a vertical one and a horizontal one.

The vanes of one row are rigidly connected to a frame which can oscillate about an axis; the vanes of the other row, on which the slider acts, are individually pivoted to said frame and can rotate about respective axes which are at right angles to the first one.

This known arrangement entails numerous problems, which include mainly: a considerable structural complexity, with consequent difficulties in assembly, which lead to higher manufacturing costs and lower reliability in operation; and an imperfect adjustment of the flow which is a consequence of the rearward arrangement of one row of vanes with respect to the other.

This known structural arrangement furthermore does not allow to use a single slider to orientate both vane rows.

The aim of the present invention is essentially to eliminate these problems and, within the scope of this general aim as defined by the claims, an important object is to provide an air vent for conditioning air with flow orientation means having a double row of vanes, said means being structurally simplified and at the same time having an improved functionality.

Another particular object of the invention is to provide an air vent wherein the flow orientation means are constituted by modular units which can be mass-produced and can be composed in diversified quantities in order to form air vents having correspondingly differentiated dimensions.

A further particular object of the invention is to provide an air vent with flow orientation means having a modular structure which can be easily assembled, to the advantage of economy in manufacture and therefore of production costs.

The invention also has the important object of simplifying the method for orientating the vanes, allowing to use a single button to move both rows.

According to the invention, there is provided an air vent for the conditioning air of motor vehicles with flow orientation means constituted by a first row and by a second row of mutually perpendicular vanes, in which the first row of vanes is hinged to a body of the air vent about first parallel axes such that the vanes of said first row are together pivotally movable about said first axes. The air vent according to the invention is characterized in that each vane of the second row is hingedly connected to a vane of the first row such that the second vanes are pivotably movable with respect to the first vanes about second parallel axes which are perpendicular to the first axes.

In one preferred embodiment, for each first vane a connecting rod is hingedly connected to respective second vanes which are hingedly connected to the first vane, so that a modular assembly is formed by the first vane, the respective second vanes, and the connecting rod.

Advantageously, according to the invention, each modular assembly is made of thermoplastic polymeric material obtained by monolithic molding and the hinges which articulate the vanes of the second row to the vanes of the first row and to the connecting rod are of the so-called "film" type.

Further characteristics and advantages of the present invention will become apparent from the following detailed description of a preferred embodiment thereof, and with reference to the accompanying drawings, which are given only by way of non-limitative example and wherein:
figure 1 is a front elevation view of the air vent according to the present invention;
figure 2 is a sectional view, taken along the plane II-II of figure 1;
figure 3 is a sectional view, taken along the plane III-III of figure 1;
figure 4 is a partial sectional view, similar to figure 3, illustrating the vertical vanes in the position for the lateral orientation of the flow;
figure 5 is a perspective view of a pair of modular assemblies arranged side by side and of the kinematic actuation means.

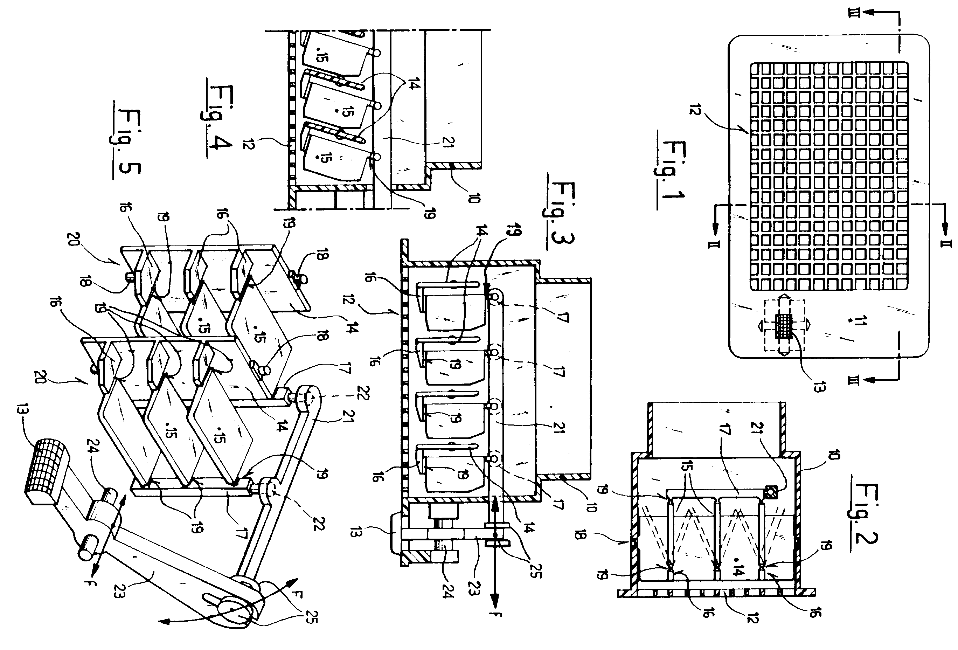

The air vent according to the invention comprises a body 10 shaped like a parallelepiped with a front base 11 which is provided with an opening 12 with a grille for the passage of air, on the side of which there is an actuation button 13 described hereinafter.

The flow orientation means are arranged in the body 10 and are constituted by a first row of vanes 14 and by a second row of vanes 15; in the illustrated example, the vanes of the first row are arranged vertically and those of the second row are arranged horizontally (with reference to the position in which the air vent is installed).

According to the invention, each vertical vane 14 of the first row has a plurality of horizontal vanes of the second row 15, for example three mutually superimposed horizontal vanes, associated with one of its faces. Each horizontal vane is pivoted, on one side, to a corresponding tab 16 of the vertical vane 14 and, on the other side, to a connecting rod 17. The set constituted by each vertical vane 14 with the horizontal vanes 15 and the connecting rod 17 associated therewith forms and constitutes a modular assembly 20 which is in turn pivoted to the body 10 of the air vent by means of pivots 18 which are provided at the ends of the vertical vane 14.

The modular assemblies such as 20 are preferably made of thermoplastic polymeric material and are obtained by monolithic molding; the articulation hinges 19 between the wings 16 and the horizontal vanes 15 and between said horizontal vanes and the rod 17 are of the "film" type, constituted by a continuous film made of the same polymeric material monolithically with both hinged parts.

The modular assemblies 20 can be composed in a variable number so as to obtain air vents having a correspondingly differentiated horizontal extension, and are assembled mutually side by side as shown in the detail view of figure 5. The connecting rods 17 of the assemblies arranged side by side are articulated to a second actuation rod 21 which is provided with appropriate spherical seats 22 which can be fitted in a snap-together manner on corresponding spherical heads of the rods 17. A lever 23 cooperates with the rod 21 and is supported, with the possibility of axial sliding in the direction of the arrows "f", by a pivot 24 which is rigidly coupled to the body 10. The lever 23 is provided, at one of its ends, with the actuation button 13 which protrudes from the base 11 and has its other end rotationally coupled, by means of a slot, to a terminal pivot of the rod 21 which is provided with shoulders 25 in order to move said rod vertically in the direction of the arrows "F" and horizontally in the direction of the arrows "f".

It is easily understood that the lateral movement of the button 13 leads to a corresponding rotation of the vertical vanes 14 about the axes of the pivots 18, whereas the vertical movement of said button leads to a corresponding rotation of the horizontal vanes 15 about the axis of the hinges 19. It should be noted that the trailing edge of the horizontal vanes 15 is slightly behind the trailing edge of the vertical vanes 14, so that aerodynamic efficiency is substantially the same for both rows of vanes.

Naturally, without altering the concept of the invention, the details of execution and the embodiments may be varied extensively with respect to what is described and illustrated by way of non-limitative example without thereby abandoning the scope of the invention.

In particular, the vanes 14, instead of being vertical, may be horizontal, and accordingly the vanes 15 may be vertical instead of horizontal.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Air vent for the conditioning air of motor vehicles with flow orientation means constituted by a first row (14) and by a second row (15) of mutually perpendicular vanes, the first row of vanes being hinged to a body (10) of the air vent about first parallel axes such that the vanes (14) of said first row are together pivotally movable about said first axes, characterized in that each vane (15) of said second row is hingedly connected to a vane (14) of said first row such that the second vanes (15) are pivotably movable with respect to the first vanes (14) about second parallel axes which are perpendicular to said first axes.

2. Air vent according to claim 1 wherein a plurality of vanes (15) of the second row are pivoted to a single vane (14) of the first row.

3. Air vent according to any one or more of the preceding claims, further comprising for each second vane (15) a tab or wing (16) which protrudes from the face of a respective first vane (14) and to which a first end of the second vane (15) is hingedly connected.

4. Air vent according to claim 3, comprising for each second vane (15) an articulation hinge (19) connecting the first end of the second vane to said tab or wing (16).

5. Air vent according to any one or more of the preceding claims, comprising for each first vane (14) a connecting rod (17) hingedly connected to a second end of respective second vanes (15) which are hingedly connected to said each first vane (14), a modular assembly (20) being formed the first vane (14), the respective second vanes (15) connected thereto, and the connecting rod (17).

6. Air vent according to claim 5, comprising for each second vane (15) an articulation hinge (19) connecting the second end of the second vane to said connecting rod (17).

7. Air vent according to any one or more of claims 4-6 wherein each modular assembly (20) is made of thermoplastic polymeric material and is obtained by monolithic molding; the hinges (19) which connect the vanes of the second row to the vane of the first row and to the connecting rod being of the film type.

8. Air vent according to any one or more of claims 5-7 further comprising an actuation rod (21) to which each said connecting rod (17) is pivoted with a spherical pivot (22) and which orientates both rows of vanes.

9. Air vent according to claim 8 wherein the actuation rod (21) is controlled by a lever (23) which can perform a translatory motion and oscillate, which is provided with a single actuation button (13) at one end, and which has its other end rigidly rotationally coupled to the actuation rod.

10. Air vent according to any one or more of the preceding claims wherein the trailing edges of the vanes of the first and second rows are co-planar or substantially co-planar.

## Patentansprüche

1. Luftaustritt für die Belüftung von Kraftfahrzeugen mit Ausrichtmitteln für den Luftstrom bestehend aus einer ersten Reihe (14) und einer zweiten Reihe (15) von zueinander rechtwinkligen Leitflächen, wobei die erste Reihe von Leitflächen an einem Körper (10) des Luftaustritts um erste parallele Achsen angelenkt ist, so daß die Leitflächen (14) der besagten ersten Reihe gemeinsam schwenkbar um die besagten ersten Achsen angeordnet sind, **dadurch gekennzeichnet**, daß jede Leitfläche (15) der besagten zweiten Reihe gelenkartig mit einer Leitfläche (14) der ersten Reihe verbunden ist, so daß die zweiten Leitflächen (15) zu den ersten Leitflächen (14) schwenkbar um zweite parallele Achsen angeordnet sind, die rechtwinklig zu den ersten Achsen gerichtet sind.

2. Luftaustritt nach Anspruch 1, wobei eine Vielzahl von Leitflächen (15) der zweiten Reihe schwenkbar an einer einzigen Leitfläche (14) der ersten Reihe angeordnet ist.

3. Luftaustritt nach einem oder mehreren der vorhergehenden Ansprüche, weiterhin für jede zweite Leitfläche (15) einen Vorsprung oder Flügel (16) aufweisend, der von der Fläche einer jeweiligen ersten Leitfläche (14) abragt und an dem ein erstes Ende der zweiten Leitfläche (15) gelenkartig befestigt ist.

4. Luftaustritt nach Anspruch 3, für jede zweite Leitfläche (15) ein Gelenkscharnier (19) aufweisend, daß das erste Ende der zweiten Leitfläche mit besagtem Vorsprung oder Flügel (16) verbindet.

5. Luftaustritt nach einem oder mehreren der vorhergehenden Ansprüche, für jede erste Leitfläche (14) eine Verbindungsstange (17) aufweisend, die gelenkig mit einem zweiten Ende der jeweiligen zweiten Leitflächen (15) verbunden ist, welche mit jeder ersten Leitfläche (14) gelenkig nierartig verbunden sind, wobei ein modularer Aufbau (20) durch die erste Leitfläche (14), die jeweiligen, damit verbundenen zweiten Leitflächen (15) und die Verbindungsstange (17) gebildet ist.

6. Luftaustritt nach Anspruch 5, für jede zweite Leitfläche (15) ein Scharnier (19) aufweisend, daß das zweite Ende der zweiten Leitfläche mit besagter Verbindungsstange (17) verbindet.

7. Luftaustritt nach einem oder mehreren der Ansprüche 4 bis 6, wobei jeder modulare Aufbau (20) aus thermoplastischem Kunststoffmaterial besteht und in einem Spritzgießprozeß aus einem Stück erzielt wird; und wobei die Scharniere (19), welche die Leitflächen der zweiten Reihe an der Leitfläche der ersten Reihe und der Verbindungsstange anlenken, vom Film-Typ sind.

8. Luftaustritt nach einem oder mehreren der Ansprüche 5 bis 7, weiterhin eine Betätigungsstange (21) umfassend, an welcher jede besagte Verbindungsstange (17) mit einem sphärischen Lager (22) angelenkt ist und welche beide Reihen von Leitflächen ausrichtet.

9. Luftaustritt nach Anspruch 8, wobei die Betätigungsstange (21) von einem Hebel (23) gesteuert wird, welcher eine lineare Bewegung ausführen und oszillieren kann, mit einem einzigen Betätigungsknopf (13) an einem Ende versehen ist und dessen anderes Ende drehbar mit der Betätigungsstange fest verbunden ist.

10. Luftaustritt nach einem oder mehreren der vorhergehenden Ansprüche, wobei die Hinterkanten der Leitflächen der ersten und zweiten Reihe koplanar oder im wesentlichen koplanar sind.

## Revendications

1. Bouche d'aération pour air de conditionnement de véhicule à moteur ayant des moyens d'orientation de l'écoulement constitués par une première rangée (14) et par une seconde rangée (15) d'ailettes mutuellement perpendiculaires, la première rangée d'ailettes étant articulée sur un corps (10) de la bouche d'aération autour de premiers axes parallèles de telle sorte que les ailettes (14) de ladite première rangée sont mobiles ensemble de manière pivotante autour desdits premiers axes, caractérisée en ce que chaque ailette (15) de ladite seconde rangée est reliée de manière articulée à une ailette (14) de ladite première rangée de sorte que les secondes ailettes (15) sont mobiles de manière pivotante par rapport aux premières ailettes (14) autour de seconds axes parallèles qui sont perpendiculaires auxdits premiers axes.

2. Bouche d'aération selon la revendication 1, dans laquelle plusieurs ailettes (15) de la seconde rangée pivotent sur une seule ailette (14) de la première rangée.

3. Bouche d'aération selon la revendication 1 ou 2, comportant de plus pour chaque seconde ailette (15) une patte ou aile (16) qui fait saillie à partir de la face d'une première ailette respective (14) et sur laquelle une première extrémité de la seconde ailette (15) est reliée de manière articulée.

4. Bouche d'aération selon la revendication 3, comportant pour chaque seconde ailette (15) une charnière d'articulation (19) reliant la première extrémité de la seconde ailette à ladite patte ou aile (16).

5. Bouche d'aération selon l'une quelconque des revendications précédentes, comportant pour chaque première ailette (14) une tige de liaison (17) reliée de manière articulée à une seconde extrémité de secondes ailettes respectives (15) qui sont reliées de manière articulée à chaque dite première ailette (14), un ensemble modulaire (20) étant formé par la première ailette (14), les secondes ailettes respectives (15) reliées à celle-ci, et la tige de liaison (17).

6. Bouche d'aération selon la revendication 5, comportant pour chaque seconde ailette (15) une charnière d'articulation (19) reliant la seconde extrémité de la seconde ailette à ladite tige de liaison (17).

7. Bouche d'aération selon l'une quelconque des revendications 4 à 6, dans laquelle chaque ensemble modulaire (20) est constitué d'une matière thermoplastique en polymère et est obtenu par moulage en un seul bloc, les articulations (19) qui relient les ailettes de la seconde rangée à l'ailette de la première rangée et à la tige de liaison étant du type film.

8. Bouche d'aération selon l'une quelconque des revendications 5 à 7, comportant de plus une tige d'actionnement (21) sur laquelle chaque dite tige de liaison (17) pivote à l'aide d'un pivot sphérique (22) et qui oriente les deux rangées d'ailettes.

9. Bouche d'aération selon la revendication 8, dans laquelle la tige d'actionnement (21) est commandée par un levier (23) qui peut réaliser un mouvement de translation et osciller, et qui est muni d'un seul bouton d'actionnement (13) au niveau d'une extrémité, et qui a son autre extrémité reliée rigidement de manière rotative à la tige d'actionnement.

10. Bouche d'aération selon l'une quelconque des revendications précédentes, dans laquelle les bords de queue des ailettes de la première et de la seconde rangée sont coplanaires ou pratiquement coplanaires.
